Europäisches Patentamt

European Patent Office

Office européen des brevets

(19)

(11) Veröffentlichungsnummer: **0 285 945**
**A2**

(12) # EUROPÄISCHE PATENTANMELDUNG

(21) Anmeldenummer: 88104946.4

(22) Anmeldetag: 28.03.88

(51) Int. Cl.⁴ **C08L 81/02 , C08L 23/00 , C08J 3/16**

(30) Priorität: 07.04.87 DE 3711623
09.05.87 DE 3715543

(43) Veröffentlichungstag der Anmeldung:
**12.10.88 Patentblatt 88/41**

(84) Benannte Vertragsstaaten:
**BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Struss, Klaus, Dr.**
**Wolfskaul 6**
**D-5000 Köln 80(DE)**
Erfinder: **Lindner, Christian, Dr.**
**Riehlerstrase 200**
**D-5000 Köln 60(DE)**
Erfinder: **Piejko, Karl-Erwin, Dr.**
**Roggendofstrasse 57**
**D-5000 Köln 80(DE)**
Erfinder: **Kress, Hans-Jürgen, Dr. c/o Mobay**
**Corporation**
**Plastics and Rubber Division (Building 8)**
**Mobay Road Pittsburgh, PA 15205(US)**
Erfinder: **Wittmann, Dieter, Dr.**
**Doerperhofstrasse 15**
**D-4150 Krefeld 1(DE)**

(54) **Pulverkompositionen auf der Basis von Polyarylensulfiden.**

(57) Die Erfindung betrifft Pulverkompositionen auf der Basis von Polyarylensulfiden, insbesondere Polyphenylensulfiden (PPS) und thermoplastischen Vinylpolymerisaten sowie ihre Verwendung zur Herstellung thermoplastischer Formmassen.

EP 0 285 945 A2

## Pulverkompositionen auf der Basis von Polyarylensulfiden

Die Erfindung betrifft Pulverkompositionen auf der Basis von Polyarylensulfiden, insbesondere Polyphenylensulfiden (PPS) und thermoplastischen Vinylpolymerisaten sowie ihre Verwendung zur Herstellung thermoplastischer Formmassen.

Polyarylensulfide sind thermisch stabil und Gegenstände aus ihnen mechanischen belastbar. Ein Kombinieren bzw. Vermischen von Polyarylensulfiden mit anderen Polymeren, z.B. Vinylpolymerisaten über übliche Schmelzcompoundierung ist problematisch und nur begrenzt durchführbar. Das gezielte Einstellen eines bestimmten Dispergiergrades der mit Polyarylensulfiden abzumischenden Komponenten mit üblichen Compoundierverfahren ist schwierig. Eine Dispergierung ist jedoch zum Erreichen guter anwendungstechnischer Eigenschaften in thermoplastischen Formmassen wichtig.

Es wurde nun gefunden, daß Pulverkompositionen aus Polyarylensulfiden und Vinylpolymerisaten thermoplastisch verarbeitet werden können, wenn die Mischung in einem Dispergiermittel hergestellt wird und durch Koagulation ausgefällt wird.

Gegenstand der Erfindung sind somit Pulverkompositionen, die wenigstens ein thermoplastisches Vinylpolymerisat sowie wenigstens ein Polyarylensulfid enthalten, hergestellt durch vermischen von Dispersionen in einem Dispersionsmedium eines thermoplastischen Vinylpolymerisates und eines Polyarylensulfids und Koagulation der resultierenden Mischung und anschließendes Abtrennen des anfallenden Koagulats vom Dispersionsmedium und Weiterverarbeitung zu einem Pulver.

Ein weiterer Gegenstand der Erfindung ist die Verwendung der erhaltenen Pulver zur Herstellung thermoplastischer Formmassen.

Als Dispersionsmedium können Wasser oder organische Medien wie Alkohole, Ester, Ketone, Ether, Amine, Lactone, Lactame, Amide, Kohlenwasserstoffe, Halogenkohlenwasserstoffe u.s.w., sowie Gemische aus diesen Medien eingesetzt werden. Bevorzugtes Medium ist Wasser.

Die erfindungsgemäß geeigneten Vinylpolymerisatdispersionen sind bekannt. Es handelt sich um übliche durch Emulsions-bzw. Dispersionspolymerisation erhältliche Polymerisatdispersionen und solche, die sich durch Dispergierung eines fertigen Polymeren erhalten lassen. Die Vinylpolymerisate können teilweise vernetzt sein.

Es können Vinylmonomerpolymerisate auf der Basis von olefinisch ungesättigten Monomeren wie Styrol, α-Methylstyrol, die gegebenenfalls am aromatischen Ring mit $C_1$-$C_8$-Alkyl und/oder Halogen wie F, Cl, Br, substituiert sein können, Acrylnitril, Methacrylnitril, Ester der Acryl-oder Methacrylsäure mit primären und/oder sekundären und/oder tertiären $C_1$-$C_{15}$-Alkoholen, Vinylester von $C_1$-$C_{15}$-Carbonsäuren, Maleinsäureanhydride, N-substituierte Maleinimide, Vinylchlorid, Vinylidenchlorid, Vinylidenfluorid und/oder thermoplastische Pfropfpolymerisate der oben genannten Monomeren auf Kautschukgrundlagen mit Kautschukglasübergangstemperaturen kleiner als 0°C, insbesondere kleiner -10°C, vorzugsweise Pfropfpolymerisate mit Kautschukgehalten von 3-85 Gew.-%, insbesondere 10-70 Gew.-% eingesetzt werden.

Bevorzugt sind Polymere des Styrols, Alkylmethacrylats, α-Methylstyrols, gegebenenfalls enthaltend Comonomere wie Acrylnitril, N-subst. Maleinimid, Alkylacrylat, Vinylacetat.

Besonders bevorzugt sind Copolymere aus Styrol und/oder α-Methylstyrol mit 0,01 bis 40 Gew.-% einpolymerisiertem Acrylnitril, oder mit 0 bis 60 Gew.-% eingebautem Methylmethacrylat, Polystyrol und Polymethylmethacrylat.

Besonders geeignete thermoplastische Vinylmonomerpolymerisate im Sinne der Erfindung sind Pfropfpolymerisate von Vinylmonomeren (Homooder Interpolymere von Monomeren aus der Reihe Styrol, α-Methylstyrol, Acrylnitril, Methacrylnitril, Vinylacetat, Alkylmethacrylat, Alkylacrylat) auf Kautschuke, die vorzugsweise teilvernetzt sind, teilchenförmige Kautschuke aus der Reihe der Dienpolymeren (Polybutadien, Polyisopren, sowie deren Copolymere mit 0,01 bis zu 40 Gew.-% Styrol, Acrylnitril, Alkyl(meth)acrylat), Acrylatkautschuke (Polyalkylacrylate, insbesondere Poly-n-butyl-, -ethyl-, -ethylhexylacrylat), die geringe Mengen Comonomere wie Butadien, Vinylether, Acrylnitril, Styrol sowie vernetzende Comonomere aus der Reihe polyfunktioneller Vinyl-oder Alkylmonomerer eingebaut enthalten können, Polyolefinkautschuke wie Polyethylen, EPDM-Kautschuk und Silikonkautschuk in teilchenförmiger, partiell vernetzter Form.

Insbesondere geeignet sind Pfropfacrylatkautschuke und Silikonpfropfkautschuke, vorzugsweise Silikonpfropfkautschuke mit Silikongehalten von 50-95 Gew.-%, insbesondere von 70-90 Gew.-%.

Die Herstellung der erfindungsgemäß verwendbaren Polyarylensulfide ist bekannt (z.B. US-PS 3 354 129).

Für die Herstellung der erfindungsgemäß geeigneten Polyarylensulfidkompositionen werden bevorzugt wenig verzweigte, insbesondere unverzweigte Polyarylensulfide eingesetzt.

Bevorzugt werden Polyarylensulfide eingesetzt, die eine Schmelzviskosität (Pas) gemessen bei 306°C bis zu $10^4$, vorteilhaft bis zu $10^3$, besonders bevorzugt bis zu 10, insbesondere bis zu 1 Pas bei

einer Schubspannung $T = 10^2$ Pa haben.

Zur Messung der Schmelzviskosität (Pas) bei 306°C und einer Schubspannung $T = 10^2$ Pa wurde ein Rheometer Modell 3250 der Firma Instron verwendet.

Zur Herstellung der erfindungsgemäß geeigneten Polyarylensulfiddispersion wird das bei der Herstellung gebildete Polyarylensulfid zunächst von der Reaktionslösung sowie von nicht umgesetzten organischen und anorganischen Bestandteilen auf übliche Weise befreit (z.B. DE-OS 3 339 233).

Die Morphologie und Teilchengröße des Polyarylensulfidpulvers kann z.B. durch die Art und Weise der Aufarbeitung der Reaktionslösung beeinflußt werden.

Als Dispergiermedium zur Herstellung der erfindungsgemäß geeigneten Polyarylensulfiddispersionen können Wasser oder organische Medien wie Alkohole, Ester, Ketone, Ether, Amine, Lactone, Lactame, Kohlenwasserstoffe, Halogenkohlenwasserstoffe, sowie Gemische aus diesen Medien eingesetzt werden. Bevorzugtes Medium ist Wasser.

Die erfindungsgemäß geeigneten Polyarylensulfiddispersionen können sowohl mit dem bei der Aufarbeitung anfallenden lösungsmittelfeuchten Polyarylensulfidpulver, als auch mit bereits getrocknetem Polyarylensulfidpulver hergestellt werden. Die bevorzugt geeigneten wäßrigen Polyarylensulfiddispersionen werden vorteilhaft mit feuchten Polyarylensulfidpulvern hergestellt.

Zur Herstellung der Polyarylensulfiddispersion und der Vinylpolymerdispersion können prinzipiell alle zur Erzeugung von Dispersionen bekannten Verfahren eingesetzt werden. Gegebenenfalls können auch Schwingungsverfahren, wie z.B. Ultraschall, angewandt werden. Die bevorzugte Herstellung erfolgt mit einem Rührer, bevorzugt mit einem Hochgeschwindigkeitsrührer, gegebenenfalls unter Druck, bei Temperaturen von 0-150°C, bevorzugt 5-90°C, insbesondere 10-60°C. Bevorzugte Polyarylensulfiddispersionen haben einen Feststoffgehalt (Polyarylensulfidgehalt) von 10-60 Gew.-%, insbesondere 15-40 Gew.-%.

Gegebenenfalls können zur Herstellung der Dispersionen auch oberflächenaktive Hilfsstoffe verwendet werden, z.B. bekannte nichtionische Emulgatoren (z.B. US-P 4 548 977). Vorzugsweise werden die Dispersionen ohne Hilfsstoffe hergestellt.

Ein zur Dispesionsherstellung des Polyarylensulfids besonders geeignetes Verfahren geht von wasserfeuchtem Polyarylensulfidpulver aus, das z.B. durch Abquetschung oder Filtration, gegebenenfalls unter Druck erhalten wird. Vom wasserfeuchten Polyarylensulfidpulver wird mit einem Hochgeschwindigkeitsrührer, gegebenenfalls unter Zusatz von Wasser eine breiartige Polyarylensulfiddispersion hergestellt.

Zur Herstellung einer erfindungsgemäß geeigneten Polyarylensulfiddispersion von bereits getrocknetem Polyarylensulfidpulver ist es vorteilhaft, es mit einem organischen Medium, z.B. Alkohol, zu behandeln und das organische Medium anschließend durch Wasser zu verdrängen. Das so erhaltene wasserfeuchte Polyarylensulfidpulver kann nach dem oben beschriebenen Verfahren zu einer Dispersion verarbeitet werden.

Zur Erzeugung der erfindungsgemäßen Pulverkompositionen wird die Polyarylensulfiddispersion mit der Dispersion des thermoplastischen Vinylpolymerisates intensiv, bevorzugt durch Rühren, vorzugsweise bei Raumtemperatur vermischt. In besonderen Fällen können höhere Temperaturen bis zu 100°C vorteilhaft sein. Gegebenenfalls können weiterer Komponenten, z.B. phenolische Antioxidantien zugegeben werden. Gegebenenfalls kann die Zugabe einer zusätzlichen Menge des Dispergiermediums vorteilhaft sein.

Die nach der Vermischung erhaltene Dispersionsmischung kann durch bekannte Verfahren, z.B. Sprühtrocknung, vom Dispergiermedium befreit werden. Bevorzugt wird die Dispersion bei 20-120°C zu einer pulverförmigen Polymermischung koaguliert. Die Koagulation erfolgt z.B. durch Zugabe von Säuren, Basen, Salzen u.s.w. Die Koagulation wird bevorzugt bei Temperatur von 20-100°C durchgeführt. Die erhaltene pulverförmige Polymermischung wird anschließend bei Temperaturen von 40-150°C getrocknet.

Die Pulver im Sinne der Erfindung besitzen eine mittlere Pulverteilchengröße (d(50)-Wert) von 1-10 000 μm, bevorzugt 10-8000 μm, insbesondere 50-5000 μm. Sie enthalten das Polyarylensulfid in hochdisperser Form (Partikelform), wie sie bei der zur Herstellung der Komposition eingesetzten Polyarylensulfiddispersion vorgelegen hat.

Bevorzugte Pulverkompositionen enthalten 1-99 Gew.-%, vorzugsweise 5-60 Gew.-%, besonders bevorzugt 10-40 Gew.-% Polyarylensulfid und 99-1 Gew.-%, vorzugsweise 95-40 Gew.-%, besonders bevorzugt 90-60 Gew.-% Vinylmonomerpolymerisat.

Ein weiterer Gegenstand der Erfindung ist die Verwendung der erfindungsgemäßen Pulverkompositionen als Zusatz zu thermoplastischen Formmassen zur Verbesserung von deren Gebrauchseigenschaften. Sie werden in Mengen von 0,5-50 Gew.-%, vorzugsweise von 1-20 Gew.-%, bezogen auf die Gesamtformmasse der Formmasse zugesetzt.

Durch den Zusatz werden verschiedene Eigenschaften der Formmassen wesentlich verbessert. So wirken die Zusätze z.B. als Antitropfmittel bei Brand der Formkörper. Weiterhin wird z.B. das Entformungsverhalten, die Schlagzähigkeit und die Wärmeformbeständigkeit verbessert.

Die Pulverkompositionen eignen sich als Zusatz zu Thermoplasten aus der Reihe ABS, ASA, PVC, Polycarbonate, Polyalkylencarbonsäuren usw.

## Beispiele

I. Herstellung eine Polyphenylensulfids, das zur Herstellung der Pulverkomposition geeignet ist.

In einem mit Rührer und Destillationsaufsatz ausgerüsteten Reaktionsgefäß werden 1673 Gew.-Teile $Na_2S$ 7-9 $H_2O$, 318 Gew.-Teile LiCl und 3054 Gew.-Teile N-Methylpyrrolidon vorgelegt und bis auf 200°C erhitzt. Es werden dabei mindestens 2600 Gew.-Teile flüchtiger Anteile abdestilliert. Anschließend werden 1102,5 Gew.-Teile 1,4-Dichlorbenzol, gelöst in 453 Gew.-Teilen N-Methylpyrrolidon, zugegeben und das Reaktionsgemisch 7h unter Rückfluß gekocht (Rückflußtemperatur 180-195°C). Nach beendeter Reaktion wird das Reaktionsgmeisch zunächst mit Ethanol und anschließend mit Wasser gewaschen. Ausbeute 502 Gew.-Teile

II. Eingesetzte Dispersionen von Vinylmonomerpolymerisaten

II. 1) ABS-Pfropfpolymeridispersion

mit einem Polymerfeststoffgehalt von 34 Gew.-% mit Wasser als Dispergiermedium. Die Dispersion wurde durch radikalische Emulsionspfropfpolymerisation eines Styrol-Acrylnitril-Gemisches auf einen Polybutadienlatex hergestellt. Das dispergierte Acrylnitril-Butadien-Styrol (ABS) Pfropfpolymer besteht aus 50 Gew.-% grobteiligem, vernetztem Polybutadien und hat eine mittlere Teilchengröße ($d_{50}$) von 0,4 $\mu$m und 50 Gew.-% Styrol-Acrylnitril-Copolymer einer Zusammensetzung von 28 Gew.-% Acrylnitril und 72 Gew.-% Styrol.

II. 2) PMMA-Dispersion

mit einem Polymerfeststoffgehalt von 34 Gew.-% mit Wasser als Dispergiermedium. Die Dispersion wurde durch radikalische Emulsionspolymerisation von Methylmethacrylat hergestellt. Das Polymethylmethacrylat (PMMA) besitzt einen einen Staudingerindex [$\pi$], gemessen in Dimethylformamid, von 0,65 dl/g.

II. 3) ASA * - Dispersion

mit einem Polymerfeststoffgehalt von 34 Gew.-% mit Wasser als Dispergiermedium. Die Dispersion wurde durch radikalische Emulsionspfropfpolymerisation von Styrol-Acrylnitril-Gemisch auf eine Emulsion eines teilvernetzten n-Butylacrylatpolymerkautschuks, vernetzt durch Einbau von Triallylcyanurat, hergestellt. Das dispergierte Pfropfpolymer besteht aus 60 Gew.-% feinteiligem Acrylatkautschuk mit einer mittleren Teilchengröße ($d_{50}$) von 0,16 $\mu$m und 40 Gew.-% Styrol-Acrylnitril-Copolymer einer Zusammensetzung von 28 Gew.-% Acrylnitril und 72 Gew.-% Styrol.

III. Herstellung der erfindungsgemäßen Pulverkompositionen

Das noch feuchte Polyphenylensulfidpulver wird nach I) mit Wasser in einer solchen Menge versetzt, daß eine 18 Gew.-%ige Aufschlämmung, bezogen auf Polyphenylensulfid, gebildet wird. Durch Rühren mit einem Schnellrührer mit einer Rührgeschwindigkeit von 1000 U/min. wird innerhalb von 15 min. eine Dispersion hergestellt.

2400 Gew.-Teile dieser wäßrigen Dispersion werden unter Rührung in 3000 Gew.-Teilen einer Dispersin nach II) eingetragen. Die resultierende Dispersionsmischung wird 1 Stunde gerührt und mit phenolsichen Antioxidatien stabilisiert. Danach wird die Dispersionsmischung durch Zusatz von Antioxidantien stabilisiert. Danach wird die Dispersionsmischung bei 70-80°C in eine wäßrige Lösung von $MgSO_4$ und Essigsäure eingetragen und 20 min. bei 90-100°C gerührt. Anschließend wird abgekühlt, filtriert und so lange gewaschen, bis das ablaufende Waschwasser nahezu elektrolytfrei ist. Das isolierte Feuchtgut wird bei 70-80°C getrocknet. Ausbeute: 1450 Gew.-Teile.

Aus den Dispersionen II. 1), II. 2), II. 3) werden folgende Pulverkompositionen III. 1), III. 2), III. 3) hergestellt, die alle ca. 30 Gew.-% Polyphenylensulfid enthalten.

Die Puler lassen sich z.B. zu Formkörpern verarbeiten oder in Kombination mit Vinylmonomer-Thermoplasten wie ABS, Polystyrol, ASA oder Polymethylmethacrylat abmischen. Es werden Formkörper erhalten die frei sind von Oberflächenstörungen während bei Vergleichs-Formmassen, die auf Basis eines üblichen PPS (Polyphenylensulfids) hergestellt wurden, Schlieren und inhomogene Formkörper gebildet werden, die außerdem unbefriedigende mechanische Eigenschaften aufweisen.

ASA = Acrylatkautschuk-Styrol-Acrylnitril-Copolymer

IV. Herstellung und Eigenschaften einer Formmasse mit Antitropfeigenschaften unter Einsatz einer erfindungsgemäßen Pulverkomposition.

A.

Lineares Polycarbonat auf Basis Bisphenol A mit einer relativen Lösungsviskosität $\pi_{rel}$ von 1,26 bis 1,28, gemessen in $CH_2Cl_2$ bei 25°C und einer Konzentration von 0,5 g/100 ml.

B.

Styrol/Acrylnitril-Copolymerisat mit einem Styrol-Acrylnitril-Verhältnis von 72:28 und einer Grenzviskosität von $[\eta]$ = 0,55 dl/g (Messung in Dimethylformamid bei 20°C).

C.

Triphenylphosphat.

D.

SAN-Pfropfpolymerisat von 50 Gew.-% Styrol-Acrylnitril-Gemisch (im Gew.-Verhältnis 72:28) auf 50 Gew.-% teilchenförmiges Polybutadien mit einer mittleren Teilchengröße ($d_{50}$) von 0,4 $\mu$m, erhalten durch radikalische Emulsionspolymerisation.

E.

Cofällprodukt aus 90 Gew.-Teilen D und 10 Gew.-Teilen PPS, hergestellt analog der Vorgehensweise in Beispiel III, nur mit anderen Mischungsverhältnissen.

Herstellung der erfindungsgemäßen Formmassen:

Die Compoundierung der Komponenten A), B), C), D) und E) erfolgte auf einem 3-l-Innenkneter bei Temperaturen zwischen 200 und 220°C.

Die Herstellung von Formkörpern der Abmessung 127 × 12,7 × 1,6 mm erfolgte auf einer Spritzgußmaschine bei 260°C.

Die Formkörper aus den erfindungsgemäßen Formmassen wiesen eine helle Eigenfarbe auf und zeigten keine Oberflächeninhomogenitäten.

Die Beurteilung des Abtropfverhaltens beim Beflammen erfolgte an einer Prüfanordnung gemäß UL-Subj. 94 V: Substanzproben werden zu Stäben der Abmessungen 127 × 12,7 × 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet. Das Abtropfverhalten nach jedem Zündvorgang wird beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 × $10^4$ kJm³ (1000 BUT per cubic foot) benutzt.

Wie nachfolgender Tabelle entnommen werden kann, tropfen die erfindungsgemäßen Formmassen in obiger Prüfanordnung nicht brennend ab.

## Tabelle

Zusammensetzung und Eigenschaften der Formmassen

| Beispiel | Komponenten (Gew.-Teile) | | | | | Abtropfverhalten gemäß UL 94 V | |
|---|---|---|---|---|---|---|---|
| | A | B | C | D | E | tropft brennend ab | tropft nicht ab |
| 1) | 60 | 16 | 8 | 24 | | | |
| 2 | 60 | 16 | 8 | 12 | 12 | | |

1) Vergleichsbeispiel

## Ansprüche

1. Pulverkomposition aus wenigstens einem thermoplastischen Vinylpolymerisat und einem Polyarylensulfid.

2. Verfahren zur Herstellung einer Pulverkomposition nach Anspruch 1), dadurch gekennzeichnet, daß a) eine Dispersion eines Polyarylensulfids mit einer Dispersion eines thermoplastishen Vinylmonomerpolymerisates vermischt wird, b) die resultierende Mischung einer Koagulation unterworfen wird, c) das anfallende Koagulat von der flüssigen Phase abgetrennt und zur einem Pulver aufgearbeitet wird.

3. Verwendung von Pulverkompositionen nach Anspruch 1) zur Herstellung thermoplastischer Formmassen.